# FASCICULE DE BREVET EUROPEEN

(11) **EP 3 424 787 B1**
(45) Date de publication et mention de la délivrance du brevet: **08.01.2020**
(21) Numéro de dépôt: 18182010.1
(22) Date de dépôt: 05.07.2018
(51) Int. Cl.: B60S 3/04, B60S 3/00, B08B 3/10, B08B 7/04, B24B 1/00, A46B 15/00, B08B 1/00, B08B 3/14, B03C 1/28, B61K 13/00

(54) **SYSTÈME DE LAVAGE DE LA CARROSSERIE D'UN VÉHICULE ET PROCÉDÉ ASSOCIÉ**
REINIGUNGSSYSTEM DER KAROSSERIE EINES FAHRZEUGS, UND ENTSPRECHENDES VERFAHREN
SYSTEM FOR WASHING A VEHICLE BODY AND ASSOCIATED METHOD

(30) Priorité: 05.07.2017 FR 1756344
(43) Date de publication de la demande: 09.01.2019
(73) Titulaire: ALSTOM Transport Technologies, 93400 Saint-Ouen (FR)
(72) Inventeur: PEREIRA, Jorge, 64200 BIARRITZ (FR)
(74) Mandataire: Lavoix

(56) Documents cités:
- EP-A1- 0 696 494
- CN-U- 206 156 816
- FR-A1- 3 008 907
- JP-A- 2006 263 673
- US-A1- 2014 109 933

## Description

La présente invention concerne un système de lavage de la carrosserie d'un véhicule et un procédé de lavage associé.

La présente invention s'applique, notamment, au nettoyage d'un véhicule ferroviaire.

Pour nettoyer un véhicule ferroviaire, on connaît des systèmes de nettoyage comprenant des brosses rotatives en rouleau. Cependant, de tels systèmes consomment une quantité importante d'eau et de produits détergents. CN 206 156 816 U montre le préambule des revendications 1 et 10.

Un des buts de l'invention est donc de fournir un système de lavage efficace et réduisant la quantité d'eau et de détergents à utiliser.

A cet effet, l'invention concerne un système de lavage de la carrosserie d'un véhicule comprenant un dispositif de dispersion d'un fluide de lavage sur la carrosserie, le fluide de lavage comprenant des applicateurs magnétiques, et un générateur de champ magnétique, propre à mettre en mouvement les applicateurs magnétiques de sorte à ce qu'ils frottent la carrosserie.

Selon d'autres modes de réalisation, le système de lavage de la carrosserie d'un véhicule comprend une ou plusieurs des caractéristiques optionnelles suivantes, prises isolément ou selon toutes les combinaisons techniquement possibles :
- le générateur de champ magnétique comporte au moins trois bobines alimentées par des tensions contrôlables.
- le générateur comprend un onduleur.
- le dispositif de dispersion est en matériau non-magnétisable.
- les applicateurs comprennent un cœur magnétisable entouré d'une couche poreuse.
- les applicateurs comprennent des brins de brosse.
- le système de lavage comprend un dispositif rétractable de lavage pour laver la face avant et la face arrière du véhicule.
- le système de lavage comprend un système de récupération des applicateurs.
- le fluide de lavage comprend un mélange d'eau savonneuse moussée formant une mousse, et
- le système de récupération comprend un système magnétique de séparation configuré pour séparer les applicateurs d'un fluide contenant les applicateurs, notamment d'une mousse.

L'invention concerne en outre un procédé de lavage d'une carrosserie de véhicule comprenant les étapes suivantes de dispersion d'un fluide de lavage sur la carrosserie, le fluide de lavage comprenant une pluralité d'applicateurs magnétiques, mise en mouvement des applicateurs par un générateur de champ magnétique, de sorte à ce que les applicateurs frottent la carrosserie.

L'invention et ses avantages seront mieux compris à la lecture de la description qui va suivre, donnée uniquement à titre d'exemple non limitatif, et faite en référence aux dessins annexés, sur lesquels :
- la figure 1 représente un système de lavage de la carrosserie d'un véhicule selon l'invention.
- la figure 2 représente un applicateur magnétique.
- la figure 3 représente une vue en coupe selon le plan III du système de lavage de la figure 1.
- la figure 4 représente un générateur de champ magnétique.

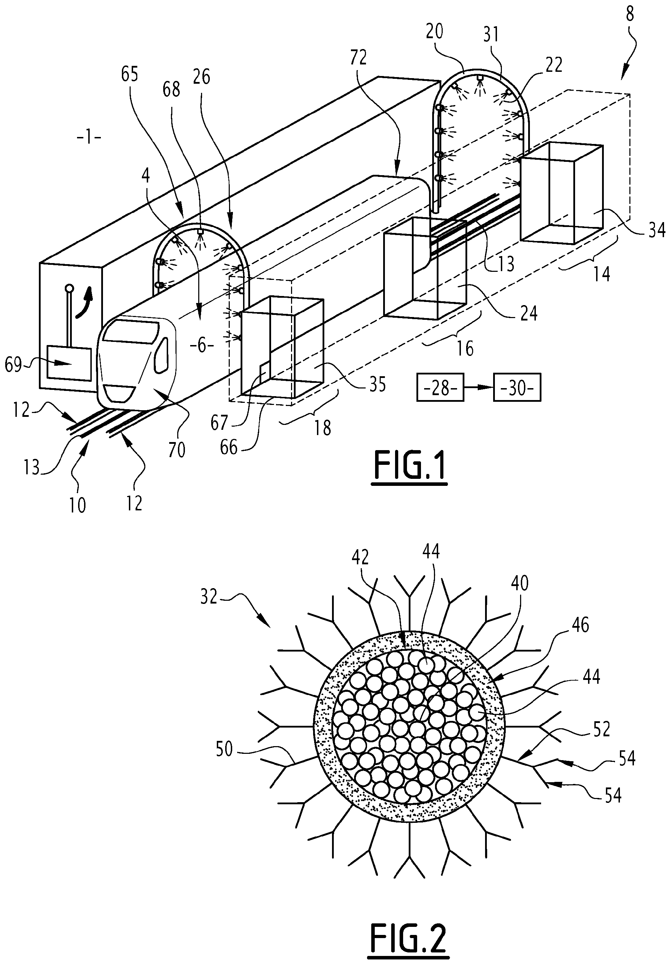

En référence à la figure 1, dans un local de lavage 1 est disposé un système de lavage 8 de la carrosserie 4 d'un véhicule 6.

Le véhicule 6 est, par exemple, un véhicule ferroviaire tel qu'un train, un tramway, un métro....

Le système de lavage 8 comprend une piste de lavage 10. La piste de lavage 10 comprend avantageusement des rails 12 permettant le déplacement du véhicule 6 au cours de son nettoyage. La piste de lavage 10 comprend, par exemple, une zone de projection 14, une zone de lavage 16 et une zone de rinçage 18 successivement le long de la piste de lavage 10. La zone de projection 14 est par exemple l'entrée de la piste de lavage 10.

La piste de lavage 10 comprend, en outre, une ligne d'alimentation 13 du véhicule 6 pour l'alimentation du véhicule 6 en énergie électrique. Dans l'exemple de la figure 1 la ligne d'alimentation 13 est située au sol, ici entre les deux rails 12. L'alimentation du véhicule 6 permet faire avancer le véhicule 6 le long de la piste de lavage 10.

Le système de lavage 8 comprend au moins un dispositif de dispersion 20 d'un fluide de lavage 22, un générateur de champ magnétique 24 et un système de récupération 26. En outre, avantageusement, le système de lavage 8 comprend un capteur 28 de position du véhicule et un contrôleur 30.

Le dispositif de dispersion 20 est configuré pour projeter du fluide de lavage 22 sur la carrosserie 4 du véhicule 8 dans la zone de projection 14. Le système de lavage 8 comprend un ou plusieurs dispositifs de dispersion 20 pour mouiller ou pour pré-mouiller l'ensemble du véhicule 6.

Le dispositif de dispersion 20 comprend, par exemple, au moins une arche de mouillage 31 pour permettre le passage du véhicule 6 sous l'arche de mouillage 31, munie de dispositifs de pulvérisation répartis sur l'arche de mouillage 31. Par exemple, les dispositifs de pulvérisations sont disposés de part et d'autre des rails 12 dans la zone de projection 14.

Le fluide de lavage 22 est, par exemple, un mélange d'eau savonneuse moussée et d'applicateurs 32 magnétiques. Le mélange d'eau savonneuse moussée forme une mousse.

Le dispositif de dispersion 20 comprend, avantageusement, des réservoirs 34 d'eau, de savon, d'applicateurs 32 et/ou de fluide de lavage 22.

Par exemple, les réservoirs 34 sont reliés fluidiquement au système de récupération 26 par des tuyaux de recirculation non représentés. Ainsi, le dispositif de dispersion 20 peut pulvériser du fluide de lavage 22 comprenant de l'eau recyclée et/ou des applicateurs 32 recyclés.

La mousse et des applicateurs 32 sont stockés séparément et mélangés pour former le fluide de lavage 22 et/ou stockés sous forme d'un fluide de lavage 22.

Avantageusement, le dispositif de dispersion 20 comprend un mélangeur pour préparer le fluide de lavage 22 contenant la mousse et les applicateurs 32. En variante, la mousse est projetée avant les applicateurs 32. En variante, la mousse est projetée après les applicateurs 32.

L'applicateur 32 est par exemple une éponge magnétique ou une brosse magnétique 32. De préférence, l'applicateur 32 est une micro-brosse magnétique.

Un applicateur 32 magnétique est représenté en détail sur la figure 2.

Par exemple, le diamètre de l'applicateur 32 est compris entre 1 mm et 10 mm.

L'applicateur 32 magnétique comprend un cœur 40 magnétisable entouré d'une écorce 42.

Le cœur magnétisable 40 comprend des microbilles 44 aimantées. Le cœur magnétisable 40 constitue, sous l'influence d'un champ magnétique, un noyau métallique se comportant comme un aimant.

L'écorce 42 est une gaine de protection. L'écorce 42 est, de préférence, souple. L'écorce 42 est par exemple en caoutchouc ou en plastique. L'écorce 42 permet de protéger les microbilles 44 du cœur 40 de la corrosion tout en protégeant la carrosserie 4 du véhicule.

L'écorce 42 est avantageusement recouverte d'une couche poreuse 46. La couche poreuse 46 est, par exemple, une éponge ou une mousse comportant de nombreuses porosités pour pouvoir stocker de la mousse du fluide de lavage 22.

Dans un exemple, chaque applicateur 32 comprend une couche superficielle formée de brins 50 de brosse, ici en forme de Y. Les brins 50 sont, avantageusement, équivalents aux brins de brosse présents dans les brosses rotatives existantes de systèmes de nettoyage utilisés dans le domaine du nettoyage de carrosserie de véhicule. Ces brins 50 permettent d'augmenter le pouvoir nettoyant des applicateurs 32. En effet, chaque brin 50 comporte une branche 52 de raccordement à l'applicateur 32 et au moins deux branches de frottement 54, chaque branche de frottement 54 pouvant entrer en contact avec la carrosserie 4 du véhicule 6.

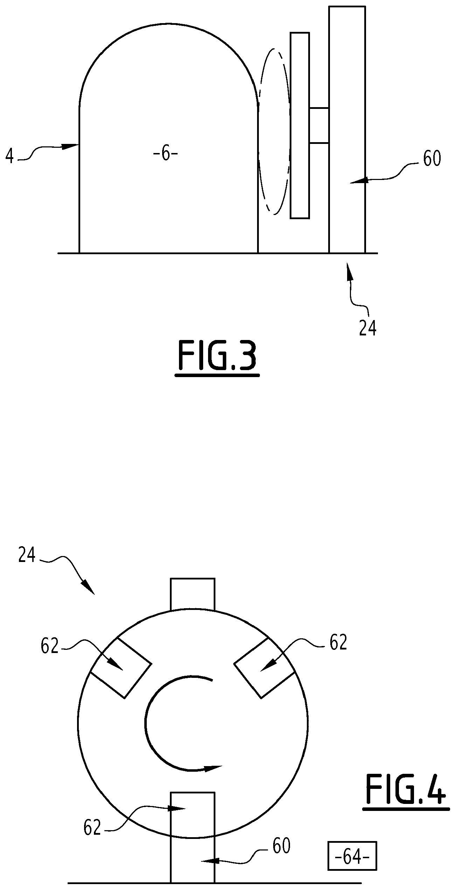

Le générateur 24 de champ magnétique est représenté plus en détail sur les figures 3 et 4.

Le générateur 24 de champ magnétique est configuré pour générer un champ magnétique mobile pour mettre en mouvement les applicateurs 32 de sorte à ce qu'ils frottent la carrosserie 4.

Le générateur 24 de champ magnétique est monté, en regard de la zone de lavage 16, sur un bras 60 ajustable de sorte à pouvoir pivoter ou s'ajuster en hauteur. Par exemple, le bras 60 est un mât motorisé. Cette configuration permet d'accéder aux différents recoins du véhicule 4.

Le générateur 24 de champ magnétique est ici tournant et propre à mettre en rotation les applicateurs 32 du fluide de lavage 22 dispersés sur la carrosserie 4, de sorte à ce qu'ils frottent la carrosserie 4.

Le générateur 24 de champ magnétique tournant comprend avantageusement trois bobines 62 électriques alimentées par des tensions d'alimentation sinusoïdales équilibrées déphasées de 2π/3 les unes par rapport aux autres. Cette disposition des bobines 62 permet au générateur 24 de champ magnétique de créer un champ magnétique tournant dont la vitesse est proportionnelle à la fréquence électrique d'alimentation des bobines, selon le théorème de Ferraris.

En variante, le générateur 24 comprend plus de trois bobines 62. Si le nombre de bobine est N, N étant un nombre entier supérieur à trois, leurs tensions d'alimentation sinusoïdales équilibrées sont déphasées de 2π/N les unes par rapport aux autres. La vitesse du mouvement des applicateurs 32 du fluide de lavage 22 est fonction de la fréquence d'alimentation du réseau. Le générateur 24 de champ magnétique comprend, avantageusement, un onduleur 64, faisant varier la fréquence d'alimentation des bobines 62 de sorte à permettre la variation de la vitesse de lavage réalisé par les applicateurs 32.

Les courants et la distance du générateur 24 de champ à la piste de lavage 10 sont, avantageusement, ajustés de sorte que les pièces intérieures du véhicule 4 ne soient pas impactées par le champ magnétique.

L'effet magnétique du générateur 24 de champ magnétique permet de transmettre une force de mouvement à chacun des applicateurs 32 du fluide de lavage 22. La force appliquée est telle que les applicateurs 32 puissent décoller les saletés fixées au véhicule 6 sans le dégrader. Par exemple, la force appliquée à chacun des applicateurs 32 du fluide de lavage est inférieure ou égale à 10 kg/m².

Le système de récupération 26 est configuré pour récupérer les applicateurs 32 à l'issue du lavage. Il comprend avantageusement un dispositif de rinçage 65, un système de recyclage 66 et un système magnétique de séparation 67.

Le dispositif de rinçage 65 est propre à projeter de l'eau sous pression sur le véhicule 6. Avantageusement, le dispositif de rinçage 65 est propre à envoyer de l'eau adoucie. Avantageusement, le dispositif de rinçage 65 est alimenté en eau par au moins un réservoir 34 contenant de l'eau.

Le dispositif de rinçage 65 comprend par exemple une arche de rinçage 68 enjambant la piste de lavage 10 et munie de dispositifs de pulvérisation répartis sur l'arche de rinçage 68.

Le système de recyclage 66 comprend avantageusement au moins une cuve de décantation 35 permettant de laisser décanter du fluide récupéré par le système de récupération 26 et contenant des applicateurs 32.

Le système magnétique de séparation 67 est configuré pour séparer les applicateurs 32 d'un fluide contenant les applicateurs 32 et récupéré par le système de récupération 26.

Le capteur 28 de position du véhicule 6 est propre à localiser le véhicule 6 sur la piste de lavage 10.

Le contrôleur 30 est propre, en fonction de la position déterminée par le capteur 28, à activer le dispositif de dispersion 20, le système de récupération 26 ou à modifier les commandes du dispositif de dispersion 20, du générateur 24 de champ magnétique et du système de récupération 26. Par exemple, le contrôleur 30 permet de modifier les puissance des jets de fluide de lavage 22, de modifier les commandes de l'onduleur 64 et les fréquences d'alimentation des bobines 62 en fonction de la partie du véhicule 6 présente dans la zone de projection 14, dans la zone de lavage 16 ou dans la zone de rinçage 18.

Avantageusement, le système de lavage 8 comprend, en outre, un dispositif rétractable 69, propre à être placée en regard de la face avant 70 du véhicule 6 ou de la face arrière 72 du véhicule 6 pour son nettoyage. Par exemple, le dispositif rétractable 69 est un système pendulaire, en variante, le dispositif rétractable 69 est pivotant ou mobile en translation selon un axe perpendiculaire à la piste de lavage 10. Le dispositif rétractable 69 comprend, par exemple, un dispositif de dispersion 20 et un générateur de champ magnétique 24 de taille réduite.

Avantageusement, le dispositif de dispersion 20, le système de récupération 26 sont équipées de tuyaux non magnétisables, par exemple en plastique.

Le fonctionnement du système de lavage 8 de la carrosserie 4 va maintenant être décrit.

Le véhicule 6 à nettoyer est guidé en zone de lavage 16 par les rails 12.

Le dispositif de dispersion 20 disperse du fluide de lavage 22 sur la carrosserie 4.

L'eau, le savon et les applicateurs 32 sont avantageusement mélangés avant la dispersion. En variante, la mousse est dispersée avant l'envoi des applicateurs 32 magnétiques.

La couche poreuse 42 des applicateurs 33 se gorge de mousse.

L'eau utilisée dans le fluide de lavage 22 peut provenir du système de récupération 26 ou d'un système de distribution d'eau de ville et/ou d'eau de pluie.

Le véhicule 6 est avancé sur la piste de lavage 10 de sorte à ce qu'une partie couverte de fluide de lavage 22 arrive en zone de lavage 16, en regard du générateur 24 de champ magnétique.

Le fluide de lavage 22 est soumis au champ magnétique par le générateur 24 de champ magnétique.

Les applicateurs 32 se mettent en mouvement en suivant les lignes de champ magnétique, et en entrainant la mousse.

Lorsque le fluide de lavage 22 est soumis à ce champ magnétique, chaque applicateur 32 se comporte comme un aimant et se déplace à une vitesse donnée par la fréquence électrique d'alimentation. Au cours de ce déplacement, l'applicateur 32 entre en contact avec la carrosserie 4 et la frotte en libérant de la mousse présente dans la couche poreuse 46. Ce frottement permet de détacher des salissures.

La répétition du processus permet le décollage de toutes les salissures. Les applicateurs 32 se déplacent et la gravité fait tomber les saletés suite au mouvement répétitif.

Lorsque le champ magnétique est tournant, le lavage avec les applicateurs 32 permet de détacher des salissures par effet rotatif.

Dans un exemple, le sens de rotation du champ magnétique est alterné au cours de la phase de lavage par modification des courants appliqués aux bobines 62 électriques au moyen du contrôleur 30.

De même, au cours de ce lavage, les faces avant et arrière 70, 72 du véhicule sont nettoyées par le dispositif rétractable 69.

Suite au nettoyage, le véhicule 6 arrive dans la zone de rinçage 18.

Dans la zone de rinçage 18, l'arche de rinçage 68 envoie de l'eau de rinçage qui va drainer les applicateurs 32. Les applicateurs 32 et la mousse, pollués, sont récupérés par le système de récupération 26. Il sont par exemple stockés dans la cuve de décantation 35.

Le système magnétique 67 permet de séparer les applicateurs 32 du fluide récupéré.

Les applicateurs 32 sont avantageusement nettoyés dans un bac pour une utilisation ultérieure. Ils sont alors, par exemple, stockés dans un réservoir 34 du dispositif de dispersion 20 en attente de la prochaine utilisation.

Dans une variante, la ligne d'alimentation 13 au sol est remplacée par une ligne d'alimentation aérienne située au-dessus du véhicule 6. Dans cette variante, chaque arche de mouillage 31 ou de rinçage 68 peut être remplacée par deux rampes de mouillage ou de rinçage disposées de part et d'autre de la piste de lavage 10, pour libérer un passage pour la ligne d'alimentation 13 au-dessus du véhicule 6. Un tel système de lavage 8 permet de réduire les coûts de maintenance et de simplifier le nettoyage car il n'est plus nécessaire d'utiliser des brosses de lavage mécaniques encombrantes. L'installation et la mise en place du système de lavage 8 est plus simple et plus rapide. En outre le recyclage des applicateurs 32 permet d'utiliser peu de consommables.

L'effet du champ magnétique appliqué aux applicateurs 32 remplace le brossage généré par les brosses de lavage d'une machine à laver conventionnelle. La multiplication du nombre d'applicateurs 32 permet un nettoyage efficace remplaçant l'utilisation d'une seule grande brosse difficile à manoeuvrer.

## Revendications

1. Système de lavage (8) de la carrosserie (4) d'un véhicule (6), **caractérisé en ce qu'**il comprend :
- un dispositif de dispersion (20) d'un fluide de lavage (22) sur la carrosserie (4), le fluide de lavage (22) comprenant des applicateurs magnétiques (32), et
- un générateur de champ magnétique (24), propre à mettre en mouvement les applicateurs magnétiques (32) de sorte à ce qu'ils frottent la carrosserie (4).

2. Système de lavage (8) selon la revendication 1, dans lequel le générateur (24) de champ magnétique comporte au moins trois bobines (62) alimentées par des tensions contrôlables.

3. Système de lavage (8) selon la revendication 1 ou 2, dans lequel le générateur de champ magnétique (24) comprend un onduleur (64).

4. Système de lavage (8) selon l'une quelconque des revendications 1 à 3, dans lequel le dispositif de dispersion (20) est en matériau non-magnétisable.

5. Système de lavage (8) selon l'une quelconque des revendications 1 à 4, dans lequel les applicateurs (32) comprennent un cœur (40) magnétisable entouré d'une couche poreuse (46).

6. Système de lavage (8) selon l'une quelconque des revendications 1 à 5, dans lequel les applicateurs comprennent des brins (50) de brosse.

7. Système de lavage (8) selon l'une quelconque des revendications 1 à 6, dans lequel le système de lavage (8) comprend un dispositif rétractable (69) de lavage pour laver la face avant (70) et la face arrière (72) du véhicule (6).

8. Système de lavage (8) selon l'une quelconque des revendications 1 à 7, comprenant un système de récupération (26) des applicateurs (32).

9. Système de lavage (8) selon la revendication 8, dans lequel le système de récupération (26) comprend un système magnétique de séparation (67) configuré pour séparer les applicateurs (32) d'un fluide contenant les applicateurs (32).

10. Procédé de lavage d'une carrosserie (4) de véhicule (6), **caractérisé en ce qu'**il comprend les étapes suivantes :
- dispersion d'un fluide de lavage (22) sur la carrosserie (4), le fluide de lavage (22) comprenant une pluralité d'applicateurs magnétiques (32),
- mise en mouvement des applicateurs (32) par un générateur (24) de champ magnétique, de sorte à ce que les applicateurs (32) frottent la carrosserie (4).

## Patentansprüche

1. Waschsystem (8) für die Karosserie (4) eines Fahrzeugs (6), **dadurch gekennzeichnet, dass** es folgendes aufweist:
- eine Vorrichtung zum Verteilen (20) eines Waschfluids (22) auf der Karosserie (4), wobei das Waschfluid (22) magnetische Applikatoren (32) aufweist, und
- einen Magnetfeldgenerator (24), der im Stande ist die magnetischen Applikatoren (32) in Bewegung zu setzen, so dass sie an der Karosserie (4) reiben.

2. Waschsystem (8) gemäß Anspruch 1, wobei der Magnetfeldgenerator (24) mindestens drei Spulen (62) aufweist, die von steuerbaren Spannungen versorgt werden.

3. Waschsystem (8) gemäß Anspruch 1 oder 2, wobei der Magnetfeldgenerator (24) einen Wechselrichter (64) aufweist.

4. Waschsystem (8) gemäß einem der Ansprüche 1 bis 3, wobei die Vorrichtung zum Verteilen (20) aus nicht magnetisierbarem Material ist.

5. Waschsystem (8) gemäß einem der Ansprüche 1 bis 4, wobei die Applikatoren (32) einen magnetisierbaren Kern (40) aufweisen, der von einer porösen Schicht (46) umgeben ist.

6. Waschsystem (8) gemäß einem der Ansprüche 1 bis 5, wobei die Applikatoren Bürstenborsten (50) aufweisen.

7. Waschsystem (8) gemäß einem der Ansprüche 1 bis 6, wobei das Waschsystem (8) eine einziehbare Waschvorrichtung (69) zum Waschen der Vorderseite (70) und der Hinterseite (72) des Fahrzeugs (6) aufweist.

8. Waschsystem (8) gemäß einem der Ansprüche 1 bis 7, aufweisend ein System zur Rückgewinnung (26) der Applikatoren (32).

9. Waschsystem (8) gemäß Anspruch 8, wobei das System zur Rückgewinnung (26) ein magnetisches Trennsystem (67) aufweist, das konfiguriert ist, um die Applikatoren (32) von einem die Applikatoren (32) enthaltenden Fluid zu trennen.

10. Verfahren zum Waschen einer Karosserie (4) eines Fahrzeugs (6), **dadurch gekennzeichnet, dass** es folgenden Schritte aufweist:
- Verteilen eines Waschfluids (22) auf der Karosserie (4), wobei das Waschfluid (22) eine Mehrzahl von magnetischen Applikatoren (32) aufweist,
- in Bewegung Setzen der Applikatoren (32) durch einen Magnetfeldgenerator (24), so dass die Applikatoren (32) an der Karosserie (4) reiben.

## Claims

1. A vehicle (6) body (4) wash system (8), **characterized in that** it comprises:
- a spray device (20) for spraying a wash fluid (22) on the body (4), the wash fluid (22) comprising magnetic applicators (32), and
- a magnetic field generator (24), able to set the magnetic applicators (32) in motion such that they rub the body (4).

2. The wash system (8) according to claim 1, wherein the magnetic field generator (24) includes at least three coils (62) supplied with controllable voltages.

3. The wash system (8) according to claim 1 or 2, wherein the magnetic field generator (24) comprises an inverter (64).

4. The wash system (8) according to any one of claims 1 to 3, wherein the spray device (20) is made from a non-magnetizable material.

5. The wash system (8) according to any one of claims 1 to 4, wherein the applicators (32) comprise a magnetizable core (40) surrounded by a porous layer (46).

6. The wash system (8) according to any one of claims 1 to 5, wherein applicators comprise brush bristles (50).

7. The wash system (8) according to any one of claims 1 to 6, wherein the wash system (8) comprises a retractable wash device (69) for washing the front face (70) and the rear face (72) of the vehicle (6).

8. The wash system (8) according to any one of claims 1 to 7, comprising a recovery system (26) for the applicators (32).

9. The wash system (8) according to claim 8, wherein the recovery system (26) comprises a magnetic separating system (67) configured to separate the applicators (32) from a fluid containing the applicators (32).

10. A method for washing a vehicle (6) body (4), **characterized in that** it comprises the following steps:
- spraying a wash fluid (22) on the body (4), the wash fluid (22) comprising a plurality of magnetic applicators (32),
- setting the applicators (32) in motion via a magnetic field generator (24), such that the applicators (32) rub the body (4).
